# EUROPÄISCHE PATENTANMELDUNG

(11) **EP 2 644 445 A2**
(43) Veröffentlichungstag der Anmeldung: **02.10.2013**
(21) Anmeldenummer: 13160569.3
(22) Anmeldetag: 22.03.2013
(51) Int. Cl.: B60N 2/46, B60R 7/04

(54) **Armauflage, insbesondere für ein Kraftfahrzeug**

(30) Priorität: 27.03.2012 DE 102012006026
(71) Anmelder: EuWe Eugen Wexler GmbH, 91207 Lauf (DE)
(72) Erfinder: Huber, Peter, 91245 Simmelsdorf (DE); Stopp, Thomas, 90552 Röthenbach (DE); Fritz, Heiko, 90542 Eckental-Eckenhaid (DE)
(74) Vertreter: Blaumeier, Jörg

(57) **Zusammenfassung**

Armauflage, insbesondere für ein Kraftfahrzeug, umfassend einen Auflageabschnitt (7), der um eine Schwenkachse zwischen einer Grundstellung und einer maximalen Aufschwenkstellung schwenkbar an einem feststehend zu montierenden Träger (3) angeordnet ist, wobei der Auflageabschnitt (7) aus der im Wesentlichen horizontalen Grundstellung aufschwenkbar ist und Arretiermittel zum Arretieren des Auflageabschnitts (7) in einer Aufschwenkstellung vorgesehen sind, die den Auflageabschnitt gegen ein Zurückschwenken in die Grundstellung arretieren, wobei die Arretiermittel (12) die Aufschwenkstellung als reversibel einnehmbare Position dauerhaft derart definieren, dass der Auflageabschnitt (7) aus der Aufschwenkstellung ohne Veränderung der zuvor bestimmten Arretierposition weiter bis in die maximale Aufschwenkstellung aufschwenkbar ist und beim Zurückschwenken wegbegrenzt zurück in die Aufschwenkstellung bewegbar ist, aus welcher er erst nach Lösen der Arretierung in die Grundstellung zurückschwenkbar ist.

## Beschreibung

Die Erfindung betrifft eine Armauflage, insbesondere für ein Kraftfahrzeug, umfassend einen Auflageabschnitt, der um eine Schwenkachse zwischen einer Grundstellung und einer maximalen Aufschwenkstellung schwenkbar an einem feststehend zu montierenden Träger angeordnet ist, wobei der Auflageabschnitt aus der im Wesentlichen horizontalen Grundstellung aufschwenkbar ist und Arretiermittel zum Arretieren des Auflageabschnitts in einer Aufschwenkstellung vorgesehen sind, die den Aufschwenkabschnitt gegen ein Zurückschwenken in die Grundstellung arretieren.

Derartige Armauflagen kommen vornehmlich in Kraftfahrzeugen zum Einsatz, sie befinden sich dort zumeist im Bereich der Mittelkonsole. Sie ermöglichen es dem Fahrer oder Beifahrer, den Arm aufzulegen, um eine entspannte Sitzposition einzunehmen. Bekannte Armauflagen bieten darüber hinaus die Möglichkeit, die Höhe der Armauflage verstellen zu können, wozu ein Auflageabschnitt vorgesehen ist, der um eine Schwenkachse zwischen einer Grundstellung und einer maximalen Aufschwenkstellung verschwenkbar ist. Er ist hierzu an einem lagefest zu montierenden Träger, der beispielsweise im Bereich der Mittelkonsole verschraubt ist oder dergleichen, angeordnet. In der Grundstellung verläuft der Auflageabschnitt im Wesentlichen horizontal, er kann aus ihr nach oben aufgeschwenkt werden, wobei je nach Ausgestaltung der Armauflage der Aufschwenkwinkel beispielsweise nur 20 - 30° beträgt, wenn über den Auflageabschnitt kein unterhalb desselben angeordnetes Behältnis abgedeckt wird, sondern er lediglich quasi als Armlehne fungiert, bis hin zu einer maximalen Aufschwenkung nahezu bis in die Vertikale, bis also ca. 90°, um einen bequemen Zugang zu einem darunter befindlichen Behältnis oder anderen Gerätschaften zu ermöglichen. Um nun einerseits die Höhenverstellbarkeit der Armauflage zu ermöglichen, sie also in eine gewünschte Position anzuheben, wie sie für den Fahrer oder Beifahrer angenehm ist, andererseits diese Position aber auch zu fixieren, ist bei bekannten Armauflagen ein Arretiermittel zum Arretieren des Auflageabschnitts in seiner eingenommenen Schwenkstellung vorgesehen. Ein solches Arretiermittel ist bei bekannten Armauflagen üblicherweise als Freilauf ausgeführt, der es ermöglicht, den Auflageabschnitt in einer Richtung aufzuschwenken, während die Rückschwenkung über einen Verzahnungseingriff unterbunden wird. Ein solcher Freilauf ist in jeder Aufschwenkposition aktiv, das heißt, dass die Verzahnung den Auflageabschnitt in jeder Schwenkstellung gegen ein Zurückschwenken fixiert. Der Verzahnungseingriff wird bei bekannten Armauflagen erst dadurch gelöst, dass der Auflageabschnitt in die maximale Aufschwenkstellung bewegt wird, was dazu führt, dass die Verzahnung automatisch geöffnet wird, mithin also eine Rastklinke oder Ähnliches automatisch ausgerückt wird, wonach ein Rückschwenken möglich ist. Um nun wieder die gewünschte Auflagenposition einzunehmen, ist es erforderlich, den Auflageabschnitt wieder etwas aufzuschwenken, wobei die dann erneut eingenommene Schwenkstellung wiederum über die Verzahnung arretiert wird. Das heißt, dass die bekannten Armauflagen zwar eine stufenlose Verstellung des Auflageabschnitts ermöglichen, jede weitere Aufschwenkbewegung aus der zuvor eingenommenen Aufschwenkposition führt jedoch zu einer erneuten Arretierung dieser neuen Position, wie ein Rückschwenken nur durch komplettes Aufschwenken und daraus resultierendem Lösen der Verriegelung möglich ist. Dies ist umständlich und wird vielfach als unzweckmäßig empfunden.

Der Erfindung liegt damit das Problem zugrunde, eine Armauflage anzugeben, die demgegenüber verbessert ist.

Zur Lösung dieses Problems ist bei einer Armauflage der eingangs genannten Art erfindungsgemäß vorgesehen, dass die Arretiermittel die Aufschwenkstellung als reversibel einnehmbare Position dauerhaft derart definieren, dass der Auflageabschnitt aus der Aufschwenkstellung ohne Veränderung der zuvor bestimmten Position weiter bis in die maximale Aufschwenkstellung aufschwenkbar ist und beim Zurückschwenken wegbegrenzt zurück in die Aufschwenkstellung bewegbar ist, aus welcher er erst nach Lösen der Arretierung in die Grundstellung zurückschwenkbar ist.

Die erfindungsgemäße Armauflage ermöglicht es unter Verwendung der Arretiermittel, eine eingestellte Aufschwenkposition als dauerhafte Arretierposition festzulegen, die einerseits gegen ein Rückschwenken gesperrt ist, aus der andererseits aber der Auflageabschnitt weiter aufgeschwenkt werden kann, ohne dass es zu einer Änderung der definierten Aufschwenkposition kommt, so dass der Auflageabschnitt nach dem weiteren Aufschwenken ohne weiteres wieder zurückgeschwenkt werden kann, bis er in die zuvor dauerhaft definierte Aufschwenkposition zurückkehrt, wo die Arretierung bzw. Schwenkbegrenzung wieder gegeben ist. Das heißt, dass der Auflageabschnitt vom Benutzer einerseits aus der Grundstellung in eine für ihn angenehme Aufschwenkposition gebracht werden kann, wo er arretiert ist und ohne weiteres belastet werden kann. Im daran anschließenden Winkelbereich zwischen der Winkelstellung der Aufschwenkposition und der maximalen Aufschwenkstellung jedoch ist der Auflageabschnitt frei verschwenkbar, die Arretiermittel greifen hier nicht. Die erfindungsgemäße Armauflage hat also quasi eine integrierte Memory-Funktion betreffend die gewünschte eingestellte Aufschwenkposition, die dauerhaft über die Arretiermittel definiert wird. Der Fahrer oder Beifahrer muss also nur einmal die Armlehne respektive den Auflageabschnitt höhenmäßig einstellen, wonach diese Position dauerhaft arretiert, also "gespeichert" ist. Ausgehend aus dieser Stellung ist eine weitere Aufschwenkung in beliebigem Umfang bis in die maximale Aufschwenkstellung und ein Zurückschwenken in die definierte Aufschwenkposition beliebig möglich. Der Fahrer oder Beifahrer kann also ohne weiteres, wenn erforderlich, den Auflageabschnitt aufschwenken, um in ein unterhalb des Auflageabschnitts befindliches Behältnis zu gelangen oder darunter befindliche, sonst abgedeckte Gerätschaften zu bedienen oder um, beispielsweise bei Anwendung als Armlehne an einem Bus-, Bahn- oder Flugzeugsitz, den Auflageabschnitt aufzuschwenken, um mehr Platz zu haben, z. B. um vom Sitz aufzustehen.

Gemäß einer besonders zweckmäßigen Weiterbildung der Erfindung umfassen die Arretiermittel einen hydraulischen oder pneumatischen Stellzylinder, der eine bei Betätigung eines Löseelements automatisch ausfahrbare und bei Lösen des Löseelements in der gegebenen Ausfahrposition arretierbare Kolbenstange aufweist, die mit dem Auflageabschnitt derart bewegungsgekoppelt ist, dass der Auflageabschnitt beim Ausfahren der Kolbenstange, zumindest hierüber unterstützt, aufschwenkt, wobei über den Ausfahrweg der Kolbenstange die Arretierposition definiert wird. Ein solcher einseitig wirkender Stellzylinder lässt ein automatisches Ausfahren der Kolbenstange bei Lösen einer Kolbenstangenarretierung zu, mithin kann also eine aktive Linearbewegung hierüber erreicht werden, die dazu dient, die Aufschwenkbewegung zu initiieren, entweder unterstützend oder, wenn die Kolbenstange mit hinreichender Kraft bewegt wird, vollständig erwirkend. Die Kolbenstange ist dabei in jeder beliebigen Position zwischen einer eingefahrenen und einer maximal ausgefahrenen Position feststellbar, wozu lediglich das Löseelement zu entlasten ist, so dass die Arretierung wieder greift. Da die Kolbenstange mit dem schwenkbaren Auflageabschnitt bewegungsgekoppelt ist, kann folglich je nachdem, wie weit die Kolbenstange ausgefahren wird, die Aufschwenkstellung des Auflageabschnitts eingestellt werden, und hierüber auch die Aufschwenkposition dauerhaft fixiert werden. Denn die Kolbenstange ist in der Aufschwenkposition wieder fixiert, kann also nicht wieder in den Zylinder gedrückt werden. Dies ist erst möglich, wenn das Löseelement wieder betätigt wird, so dass die Kolbenstangenarretierung aufgehoben wird und der Nutzer durch Drücken auf den Auflageabschnitt infolge der Bewegungskopplung die Kolbenstange wieder nach innen schiebt. Die Bewegungskopplung der Kolbenstange zum Auflageabschnitt ist dabei derart, dass beim Ausfahren der Kolbenstange der Auflageabschnitt quasi mitgenommen wird. Ein Rückschwenken ist nicht möglich. Gleichwohl jedoch ist die Bewegungskopplung so ausgelegt, dass der Auflageabschnitt beim weiteren Aufschwenken quasi entkoppelt von der Kolbenstange frei bewegt werden kann.

Dies kann auf unterschiedliche Möglichkeiten erreicht werden. Gemäß einer ersten Erfindungsalternative kann die Kolbenstange mit ihrem Ende über ein daran vorgesehenes Verbindungselement mit einer Übertragungsstange, welches Verbindungselement dort in ein Langloch eingreift, gekoppelt sein, welche Übertragungsstange ihrerseits exzentrisch zur Schwenkachse des Auflageabschnitts mit diesem verbunden ist, derart, dass bei in der Grundstellung befindlichem Auflageabschnitt und Lösen der Arretierung die Kolbenstange ausfährt und über das Verbindungselement die Übertragungsstange bis zum Erreichen der Ausfahrstellung mitnimmt, die dann erreicht ist, wenn beispielsweise die Arretierung wieder durch Entlasten des Löseelements greift, wobei infolge der Kolbenstangenbewegung der Auflageabschnitt aufgrund der Bewegung der Übertragungsstange um seine Schwenkachse aufschwenkt, wonach bei weiterer manueller Aufschwenkung des Auflageabschnitts die Übertragungsstange relativ zum stehenden, in dem Langloch wandernden Verbindungselement bewegt wird, und bei nachfolgendem Zuschwenken des Auflageabschnitts die Übertragungsstange in die entgegengesetzte Richtung soweit bewegt wird, bis das Ende des Langlochs gegen das stehende Verbindungselement läuft. Hier kommt also zur Bewegungskopplung eine Übertragungsstange zum Einsatz, die über ein Verbindungselement mit der Kolbenstange gekoppelt ist. Das Verbindungselement greift in ein Langloch der Übertragungsstange ein. Mit dem anderen Ende ist die Übertragungsstange exzentrisch zur Schwenkachse des Auflageabschnitts mit diesem verbunden. Fährt nun die Kolbenstange aus, so wird das Verbindungselement bewegt. Da es am einen Ende des Langlochs anliegt, kommt es folglich zu einer Mitnahme der Übertragungsstange, was in einer gleichzeitigen Mitnahme des Auflageabschnitts resultiert, dieser wird also um seine Schwenkachse aufgeschwenkt. Diese Mitnahme der Übertragungsstange erfolgt solange, bis die gewünschte Ausfahrstellung erreicht ist, was entweder dadurch definiert ist, dass der Benutzer das Löseelement, das die Kolbenstangenarretierung gelöst hat, wieder entlastet, mithin also die Stange wieder arretiert wird, oder dass die Kolbenstange die maximale wegbegrenzte Ausfahrstellung, die über ein an einem Träger vorgesehenes weiteres Langloch, in das das Verbindungselement greift, definiert ist, erreicht. Das heißt, dass die Kolbenstange ausgehend von der Grundstellung bis in eine maximale Ausfahrstellung bewegbar ist, die wie beschrieben beispielsweise durch das weitere Langloch begrenzt ist, wobei aber gleichzeitig jedwede Zwischenausfahrstellung arretiert werden kann. Mit jedweder Position ist eine entsprechende Aufschwenkwinkelstellung des Auflageabschnitts verbunden, der also in einem definierten Winkelbereich durch die Aktion der Kolbenstange gebracht werden kann, in welcher Position er infolge der arretierten Kolbenstange auch gegen ein Rückschwenken arretiert ist.

Wie beschrieben ist gemäß einer Weiterbildung der Erfindung die maximale Ausfahrstellung über ein an einem Träger, gegebenenfalls demselben Träger, an dem auch der Auflageabschnitt gelagert ist, vorgesehenes weiteres Langloch, in das das Verbindungselement greift, definiert. Das Verbindungselement durchgreift also hier also zwei Langlöcher, nämlich zum einen das Langloch der Übertragungsstange, zum anderen das Langloch im Träger. Das Langloch im Träger definiert folglich die maximale Ausfahrbewegung, nachdem das Verbindungselement in der Grundstellung am einen Langlochende liegt, und beim Ausfahren der Kolbenstange, die Ausfahrbewegung begrenzend, gegen das andere Langlochende läuft. Die Übertragungsstange ihrerseits weist ein demgegenüber wesentlich längeres Langloch auf, nachdem sie beim weiteren Aufschwenken des Auflageabschnitts relativ zur Kolbenstange und damit relativ zum stehenden Verbindungselement bewegt wird, das heißt, dass das Verbindungselement beim freien Schwenken des Auflageabschnitts im übertragungsstangenseitigen Langloch läuft.

Der über die Kolbenstange erwirkbare und feststellbare Aufschwenkwinkel kann im Bereich von 0° (also in der Grundstellung befindlichem Auflageabschnitt) bis hin zu beispielsweise maximal 30° liegen, bevorzugt im Bereich bis maximal ca. 20°. In entsprechender Weise ist natürlich die Länge respektive Position des trägerseitigen Langlochs zu wählen.

Des Weiteren ist bevorzugt ein Träger vorgesehen, an dem der Stellzylinder mit seinem positionsfesten Ende, bevorzugt in einer Schwenklagerung, angeordnet ist. Der Stellzylinder muss mit einem Ende positionsfest sein, damit die Kolbenstange entsprechend abgestützt ausfahren kann. Da aufgrund der gegebenen Kinematik eine gewisse Verschwenkung des Stellzylinders möglich ist, ist die Befestigung des Stellzylinders an diesem Träger bevorzugt eine Schwenklagerung, die eine wenngleich geringe Verschwenkung des Zylinders ermöglicht.

Besonders bevorzugt ist ein gemeinsamer Träger, an dem sowohl das weitere Langloch ausgebildet ist als auch der Auflageabschnitt und der Stellzylinder angeordnet sind. Dieser gemeinsame Träger dient also als Träger respektive Lagerbauteil für die wesentlichen Elemente, nämlich den Auflageabschnitt und den Stellzylinder, wie auch als Führung für das Verbindungselement, das das dortige Langloch durchgreift und welches die maximale Ausfahrstellung definiert. Hierüber kann die Kompaktheit der Armauflage verbessert werden. Denkbar wäre es jedoch gleichermaßen, jeweils separate Träger zu verwenden.

Ist der Auflageabschnitt relativ schmal, z. B. eine nur wenige Zentimeter breite Armlehne, so kann es ausreichend sein, nur eine einseitige Lagerung nebst Kinematik mit nur einer Übertragungsstange mit nur einem Träger vorzusehen. Als Beispiel sei eine schmale Armlehne eines Flugzeugsitzes genannt. Nach einer besonders zweckmäßigen Weitebildung der Erfindung ist vorgesehen, dass, gegebenenfalls jeweils, zwei benachbarte Träger, an denen der Auflageabschnitt schwenkgelagert und/oder die jeweiligen Langlöcher vorgesehen sind und/oder der Stellzylinder befestigt ist, sowie zwei Übertragungsstangen vorgesehen sind. Vor allem bei relativ breiten Armauflagen respektive Auflageabschnitten ist eine beidseitige Lagerung und daraus resultierend entsprechende doppelte Kinematik zweckmäßig. Bevorzugt kommen dabei zwei einteilige gemeinsame Träger zum Einsatz, die der Schwenklagerung des Auflageabschnitts wie auch der Halterung des Stellzylinders dienen, und an denen jeweils ein die maximale Ausfahrposition definierendes Langloch ausgebildet ist, wie auch zwei entsprechende, benachbart zu diesen verlaufende Übertragungsstangen.

Kommen zwei derartige Träger vor, so ist eine sie verbindende Lagerstange vorgesehen, an der der Stellzylinder angeordnet ist, ferner eine weitere Lagerstange, an der der Auflageabschnitt schwenkbar gelagert ist, wie auch das Verbindungselement eine am Kolbenstangenende vorgesehene, sich zu beiden Seiten erstreckende Stange ist. Da lediglich ein Stellzylinder vorgesehen ist, wird dieser zweckmäßigerweise mittig zwischen den beiden Trägern bzw. Übertragungsstangen angeordnet. Zur Lagerung respektive Bewegungskopplung kommen nun entsprechende Stangen zum Einsatz, die sich zwischen den Trägern respektive Übertragungsstangen erstrecken.

Bei der beschriebenen zentralen Erfindungsalternative hinsichtlich der Bewegungskopplung befindet sich der Stellzylinder mit zugeordneter Kinematik respektive Mechanik quasi in vertikaler Anordnung unterhalb und am hinteren Ende des Auflageabschnitts. Eine weitere zweckmäßige Erfindungsalternative hinsichtlich dieser Bewegungskopplung sieht demgegenüber vor, dass der Stellzylinder unterseitig an dem Auflageabschnitt angeordnet ist, mithin also mit diesem bewegbar ist, wobei an der Kolbenstange ein Führungselement angeordnet ist, das beim Ausfahren der Kolbenstange auf eine positionsfeste schräg stehende Führungsfläche aufläuft und längs dieser läuft, dabei den Auflageabschnitt samt Stellzylinder aufschwenkend. Bei dieser Erfindungsausgestaltung ist also eine in der Grundstellung horizontale Stellzylinderanordnung vorgesehen, wobei der Stellzylinder mit dem Auflageabschnitt bewegt wird. Der Stellzylinder ist mit einem Ende positionsfest am Auflageabschnitt fixiert, die Kolbenstange ist wiederum ausfahrbar und trägt ein Führungselement, das bevorzugt bereits in der Grundstellung an einer schräg stehenden Führungsfläche anliegt. Wird nun die Kolbenstange ausgefahren, so drückt das Führungselement gegen die schräge Führungsfläche und läuft auf dieser auf, stützt sich also an dieser ab, was zum Aufschwenken des Auflageabschnitts führt. Je nachdem, wie weit die Kolbenstange ausgefahren wird (auch hier zwischen einer eingefahrenen Stellung und einer maximalen Ausfahrstellung, wobei wiederum jedwede Zwischenstellung arretierbar ist) kann nun der gewünschte Aufschwenkwinkel dauerhaft eingestellt werden. Wird nun aus der über den Ausfahrweg definierten Aufschwenkposition der Auflageabschnitt weiter aufgeschwenkt, so löst sich das Führungselement von der Führungsfläche, da der Stellzylinder samt Kolbenstange mit aufgeschwenkt wird. Der Auflageabschnitt ist auch hier frei schwenkbar und kann zurückgeschwenkt werden, wobei die Rückschwenkbewegung wegbegrenzt ist, derart, dass das Führungselement wieder gegen die Führungsfläche geschwenkt wird, wenn die vorab definierte Aufschwenkposition wieder eingenommen wird. Zum Zuschwenken ist auch hier wiederum die Kolbenstangenarretierung zu lösen und der Auflageabschnitt gegen die Rückstellkraft des Stellzylinders unter Einschieben der Kolbenstange zuzudrücken.

Das Führungselement der Kolbenstange kann in Form einer oder zweier an der Kolbenstange drehgelagerter Laufrollen realisiert sein, die auf der schrägen Führungsfläche abrollen. Alternativ kann auch ein Gleitschuh vorgesehen sein.

Auch bei dieser Erfindungsausgestaltung sind bevorzugt zwei benachbarte Träger vorgesehen, an denen der Auflageabschnitt beidseits schwenkgelagert ist. Hier sind jedoch die Träger ausschließlich dazu da, den Auflageabschnitt schwenkzulagern, weder ist an ihnen ein Langloch oder dergleichen noch ein weiteres Schwenklager für ein der Kinematik dienendes Bauteil vorzusehen.

Kommen zwei gemeinsame Träger zum Einsatz, so sind diese entweder einstückig oder lösbar an einem behälterartigen Körper, der mittels des Auflageabschnitts verschließbar ist, angeordnet. Dieser behälterartige Körper wird über geeignete Befestigungsmittel beispielsweise an der Mittelkonsole fahrzeugseitig fixiert. An ihm sind die beiden Träger rückseitig entweder einstückig angeformt, oder in geeigneter Weise daran befestigt, wenn die beiden Träger separate Bauteile darstellen. Die Befestigung kann entweder über Schrauben oder sonstige Rast-oder Klemmverbindungen erfolgen.

Bevorzugt werden die wesentlichen Teile der Armauflage aus Kunststoff ausgeführt, das heißt, dass ein Träger, und insbesondere der behälterartige Körper samt beider Träger, aus Kunststoff gefertigt sind, was herstellungs- und gewichtstechnische Vorteile hat.

Der Auflageabschnitt selbst besteht aus einem Tragbauteil, vornehmlich wiederum einem Kunststoffbauteil, an dem ein oder zwei der Schwenklagerung und der Verbindung zu der oder den Übertragungsstangen dienende Lagerabschnitte vorgesehen sind, sowie aus einem am Tragbauteil angeordneten oder dieses zumindest teilweise umhüllenden Auflagebauteils, also einer Aufpolsterung. Auch das Auflagebauteil kann bevorzugt im Wesentlichen aus z. B. geschäumtem Kunststoff bestehen und beispielsweise mit einem Lederüberzug versehen sein.

Insbesondere bei Ausgestaltung eines Trägers oder des Tragbauteils aus Kunststoff ist es zweckmäßig, wenn ein daran vorgesehenes Schwenklager oder Langloch über ein Metallelement, insbesondere eine Metallbuchse verstärkt ist. Diese Metallbuchse dient der Aussteifung und Stabilisierung, um die gegebenen Kräfte auffangen zu können.

Weitere Merkmale, Vorteile und Einzelheiten der Erfindung ergeben sich aus den im Folgenden beschriebenen Ausführungsbeispielen sowie anhand der Zeichnungen. Dabei zeigen:
- Fig. 1: eine Explosionsansicht einer erfindungsgemäßen Auflage einer ersten Ausführungsform,
- Fig. 2: die Armauflage aus Fig. 1 in zusammengebautem Zustand,
- Fig. 3: die Armauflage aus Fig. 2 mit vollständig geöffnetem Auflageabschnitt,
- Fig. 4: eine Seitenansicht der geschlossenen Armauflage,
- Fig. 5: eine vergrößerte Teilansicht im Bereich der Bewegungskopplung der Kolbenstange zur Führungsstange und dem Träger,
- Fig. 6: eine Seitenansicht der Armauflage mit in einer festgestellten Aufschwenkposition befindlichem Auflageabschnitt,
- Fig. 7: die vergrößerte Ansicht entsprechend Fig. 5 zur Stellung aus Fig. 6,
- Fig. 8: eine Seitenansicht der Armauflage mit vollständig aufgeschwenktem Auflageabschnitt, ausgehend von Fig. 6,
- Fig. 9: die vergrößerte Ansicht entsprechend Fig. 7 zur Stellung aus Fig. 8,
- Fig. 10: eine Seitenansicht der Armauflage mit einer bei 0° arretierten Aufschwenkposition und aufgeschwenktem Auflageabschnitt,
- Fig. 11: die entsprechende vergrößerte Teilansicht zu Fig. 10,
- Fig. 12: eine Explosionsansicht einer zweiten Ausführungsform mit einer erfindungsgemäßen Armauflage,
- Fig. 13: die zusammengesetzte Armauflage aus Fig. 12,
- Fig. 14: eine Seitenansicht der Armauflage aus Fig. 13,
- Fig. 15: eine Seitenansicht der Armauflage mit in arretierter Aufschwenkposition befindlichem Auflageabschnitt,
- Fig. 16: eine Seitenansicht der Armauflage aus Fig. 15 mit weiter aufgeschwenktem Auflageabschnitt, und
- Fig. 17: eine Seitenansicht der Armauflage mit bei 0° festgestellter Aufschwenkposition und aufgeschwenktem Auflageabschnitt.

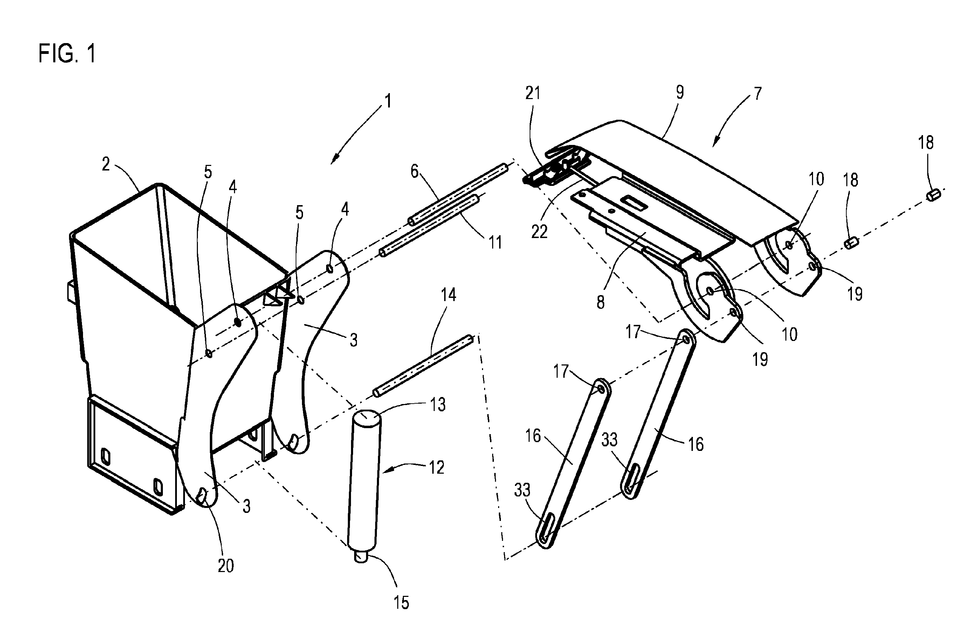

Fig. 1 zeigt eine Explosionsdarstellung einer erfindungsgemäßen Armauflage 1, umfassend einen behälterartigen Körper 2, an dessen rückseitigem Ende seitlich zwei Träger 3 angeordnet sind. Das einstückige Bauteil ist aus Kunststoff gefertigt. An den beiden Trägern sind paarweise zwei Lagerdurchbrechungen 4, 5 vorgesehen, wobei durch die beiden Lagerdurchbrechungen 4 in der Montagestellung eine Lagerstange 6 greift, die der Schwenklagerung eines Auflageabschnitts 7 dient. Der Auflageabschnitt 7 weist ein Tragbauteil 8 und ein dieses zumindest teilweise umhüllendes Auflagebauteil 9 auf, wobei am Tragbauteil 8 entsprechende Lagerdurchbrechungen 10 vorgesehen sind, die die Lagerstange 6 durchsetzt.

Die beiden Lagerdurchbrechungen 5 werden von einer weiteren Lagerstange 11 durchsetzt, die als Befestigungsstange für einen pneumatischen oder hydraulischen Stellzylinder 12 dient, der mit seinem oberen Ende 13 an der Lagerstange, dort leicht schwenkbar, festgelegt wird.

Vorgesehen ist des Weiteren eine Stange 14, die am freien Ende einer Kolbenstange 15 des Stellzylinders 12 angeordnet wird. In der Montagestellung durchgreift die Stange 14 zwei Langlöcher 33, die an zwei Übertragungsstangen 16 endseitig vorgesehen sind. Die Übertragungsstangen 16 sind über zwei Lagerdurchbrechungen 17 schwenkbar mittels zweier entsprechender Lagerzapfen 18 in entsprechenden Lagerdurchbrechungen 19 am Tragbauteil 8 des Auflageabschnitts 7 angelenkt. Des Weiteren greift die Stange 14 in zwei an den Trägern 3 ausgebildete Langlöcher 20 ein. Die Stange 14 ist also innerhalb der Langlöcher 33 und 20 beweglich, sie ist fest mit der Kolbenstange 15 verbunden und wird beim Ausfahren derselben über diese bewegt.

Vorgesehen ist ferner ein zum Ausfahren der Kolbenstange 15 zu betätigendes Löseelement 21, das beispielsweise über eine Zugstange oder ein Bowdenzug 22 mit dem Stellzylinder 12 gekoppelt ist und bei dessen Betätigung die Kolbenstange 15 freigegeben wird, sodass diese hydraulisch oder pneumatisch automatisch ausgefahren wird. Wird das Löseelement 21 wieder entlastet, wird die Kolbenstange 15 sofort in der gegebenen Position arretiert.

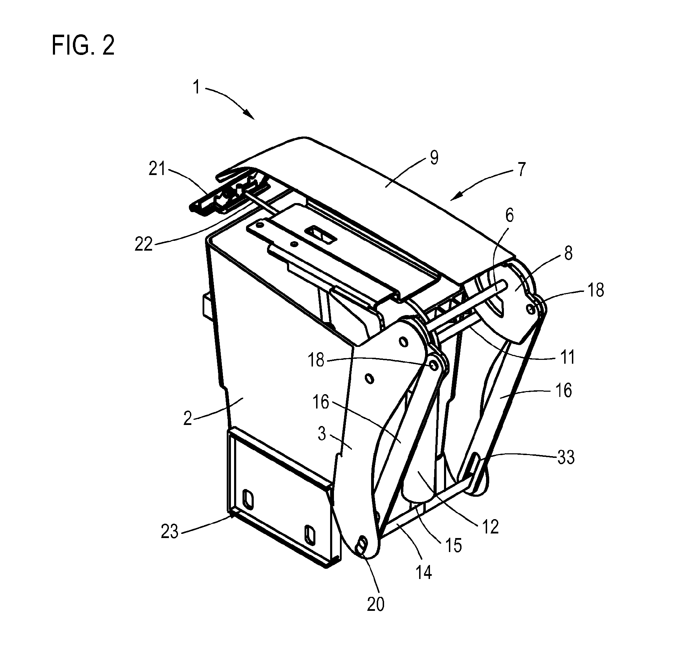

Fig. 2 zeigt die Armauflage 1 aus Fig. 1 in montierter Form. Wie in allen Figuren 1 - 3 ist das Auflagebauteil 9, beispielsweise eine Aufpolsterung, nur teilweise dargestellt, damit der Blick darunter freigegeben ist. Der Stellzylinder 12 ist an der Lagerstange 11 befestigt, die Kolbenstange 15 trägt die Stange 14, die ihrerseits die Langlöcher 15 in den beiden Übertragungsstangen 16 durchgreift und ferner in die beiden Langlöcher 20 an den Trägern 3 eingreift. Weiterhin ist ersichtlich, dass der Auflageabschnitt 7 an der Lagerstange 6 schwenkbar aufgenommen ist, wie auch die beiden Übertragungsstangen 16 über die Lagerzapfen 18 am Tragbauteil 8 in den entsprechenden Lagerdurchbrechungen 19 aufgenommen sind. In dieser Konfiguration wird die Armauflage 1 beispielsweise an der Mittelkonsole eines Kraftfahrzeugs verbaut, wozu entsprechende, am behälterartigen Körper 2 unterseitig vorgesehene Befestigungsmittel 23, z. B. entsprechende Schraubenaufnahmen etc., vorgesehen sind.

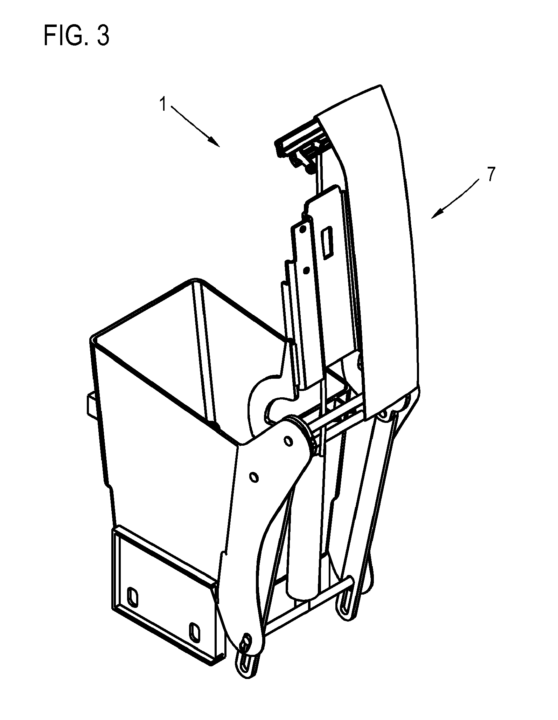

Fig. 3 zeigt die Armauflage 1 aus Fig. 1 mit aufgeschwenktem Auflageabschnitt 7, der von der 0°-Grundstellung gemäß Fig. 2 in eine 90°-Offenstellung geschwenkt werden kann. Das Verschwenken zwischen der Grundstellung und der maximalen 90°-Offenstellung ist, wenn nicht irgendeine dazwischen liegende Aufschwenkposition über den Stellzylinder 12 festgelegt ist, frei möglich, d. h., dass der Auflageabschnitt 7 ohne jedwede Positionsarretierung zwischen beiden Stellungen manuell verschwenkt werden kann.

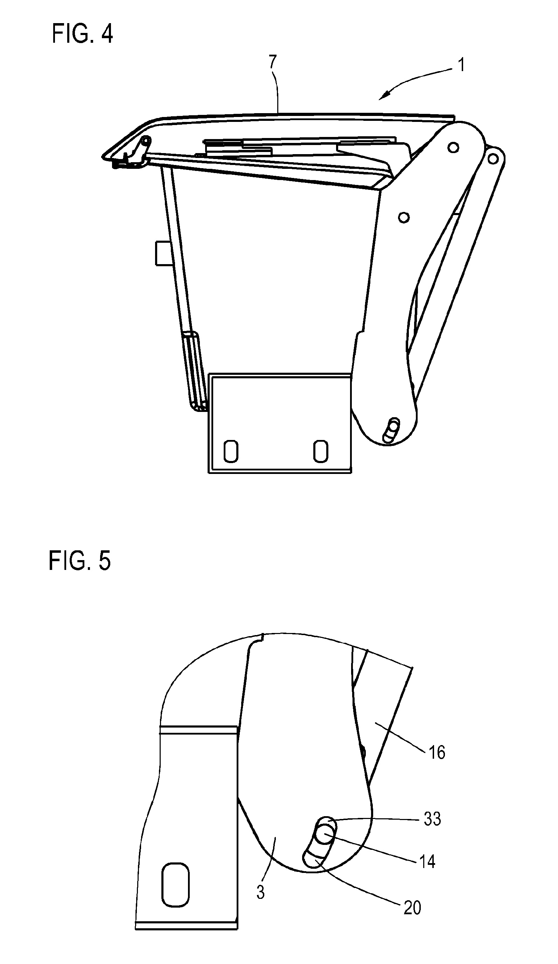

Bei der Armauflage 1 ist jedoch die Möglichkeit gegeben, eine zwischen der Grundstellung und der maximalen Ausfahrstellung der Kolbenstange 15 liegende Aufschwenkposition als wegbegrenzte Position dauerhaft zu definieren, die der Auflageabschnitt 7 also dauerhaft inne hält. Aus dieser Position kann er ohne Lösen der Kolbenstangenarretierung nicht mehr zurückgeschwenkt werden, er kann aber ohne weiteres beliebig ohne jedwede Zwischenarretierung in die maximale Offenstellung geschwenkt werden. Die diesbezügliche Funktion und Kinematik ist in den nachfolgenden Figuren 4 - 11 näher beschrieben.

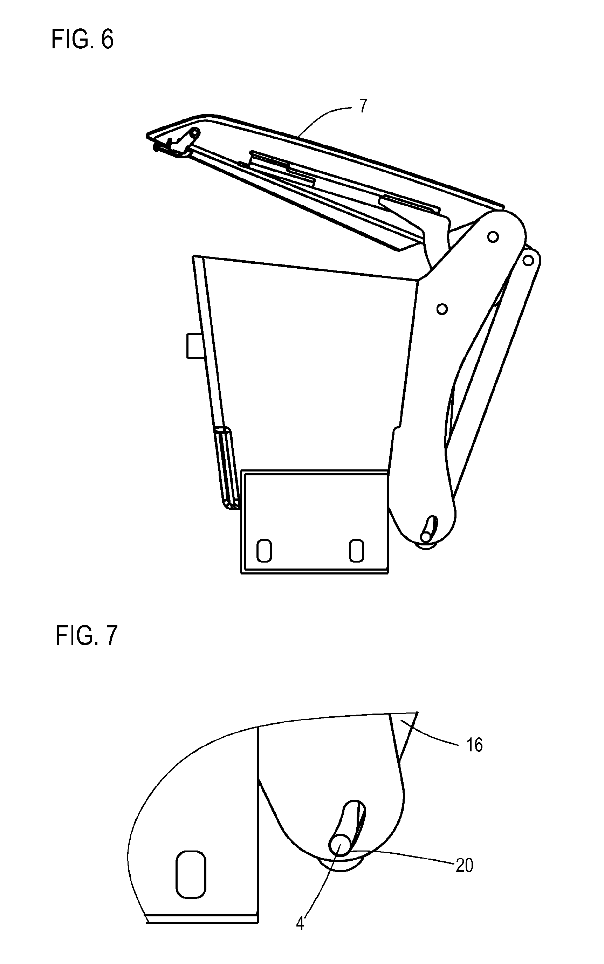

Die Fig. 4 und 5 zeigen eine Seitenansicht der erfindungsgemäßen Armauflage 1 mit geschlossenem Auflageabschnitt 7. Die Kolbenstange ist hier eingefahren. Die Stange 14 - siehe insbesondere Fig. 5 - liegt einerseits am unteren Ende des jeweiligen Langlochs 33 an, zum anderen befindet sie sich im Bereich des oberen Endes des Langlochs 20 des jeweiligen Trägers 3. In dieser Position wird nun das Löseelement 21 betätigt und damit die Arretierung der Kolbenstange 15 gelöst. Diese fährt pneumatisch oder hydraulisch gesteuert aus. Sie bewegt sich, ausgehend von Fig. 5, nach unten, und zwar so lange, bis entweder das Löseelement 21 wieder entlastet wird, mithin also die Arretierung greift, oder bis die Stange 14, siehe hierzu die Fig. 6 und 7, gegen das untere Ende des jeweiligen trägerseitigen Langlochs 20 läuft. Dies ist die maximale Kolbenstangenbewegung, die möglich ist, d. h., dass die beiden Langlöcher 20 den maximalen Stangenbewegungsweg definieren. Während dieser Bewegung werden, nachdem die Stange 14 am unteren Ende der Langlöcher 15 anliegt, gleichzeitig die beiden Übertragungsstangen 16 mitgenommen und nach unten bewegt. Da diese fest, jedoch schwenkbar, mit dem Auflageabschnitt 7 verbunden sind, der Anlenkpunkt jedoch exzentrisch zur über die Lagerstange 6 gebildeten Schwenkachse liegt, kommt es zu einem Aufschwenken des Auflageabschnitts 7, siehe die Fig. 6 und 7. Diese Position ist nun, nachdem die Kolbenstange 15 wieder arretiert ist und folglich nicht wieder zurückgedrückt werden kann, als Aufschwenkposition dauerhaft festgelegt, d. h., dass selbst bei kräftigem Drücken auf den Auflageabschnitt 7 dieser nicht mehr in die in Fig. 6 gezeigten 0°-Stellung übergeht. Dies ist nur möglich, wenn über das Löseelement 21 die Kolbenstangenarretierung wieder aufgehoben wird und durch Drücken auf den Auflageabschnitt 7 und daraus resultierendes Hochziehen der beiden Übertragungsstangen 16 auch die Stange 14 wieder hochgezogen und folglich die Kolbenstange 15 in das Zylindergehäuse zurückgeschoben wird.

An dieser Stelle der Hinweis, dass selbstverständlich jede Zwischenposition zwischen der 0°-Stellung gemäß Fig. 4 und der maximalen Aufschwenkstellung gemäß Fig. 6, die beispielsweise 18° oder 20° beträgt, arretiert werden kann.

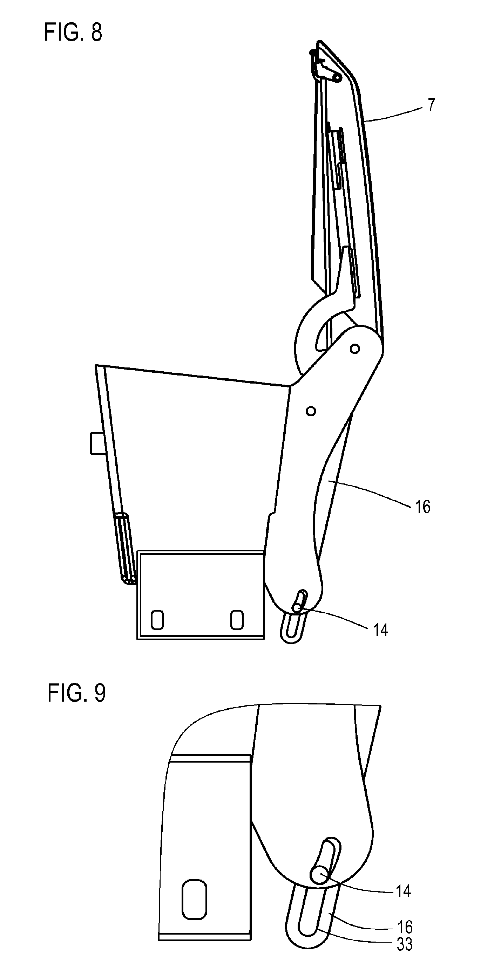

Unabhängig davon, in welcher Stellung nun diese Arretierung erfolgt, ist in jedem Fall der Auflageabschnitt zwischen der arretierten Stellung, beispielsweise gemäß Fig. 6 und der maximalen Aufschwenkstellung gemäß Fig. 3 beliebig oft ohne jedwede Zwischenarretierung verschwenkbar. Wird ausgehend von Fig. 6 der Auflageabschnitt 7 weiter in die in Fig. 8 gezeigte Stellung aufgeschwenkt, so werden hierbei lediglich die beiden Übertragungsstangen 16 weiter nach unten bewegt, resultierend aus der exzentrischen Anordnung am Tragbauteil 8. Dies ist möglich, nachdem die Stange 14 in den deutlich längeren Langlöchern 33 noch genügend Raum hat, mithin also die beiden Übertragungsstangen 16 relativ zur feststehenden Stange 14 verschoben werden können. Vorausgehend von Fig. 8 wird der Auflageabschnitt 7 zurückgeschwenkt, so ist dies bis maximal in die zuvor arretierte Aufschwenkposition, hier also beispielsweise in die Position gemäß Fig. 6, möglich. Denn die Rückschwenkbewegung wird dadurch begrenzt, dass die unteren Enden der Langlöcher 33 wieder gegen die Stange 14 laufen, die jedoch unbeweglich ist, da die Kolbenstange 15 arretiert ist.

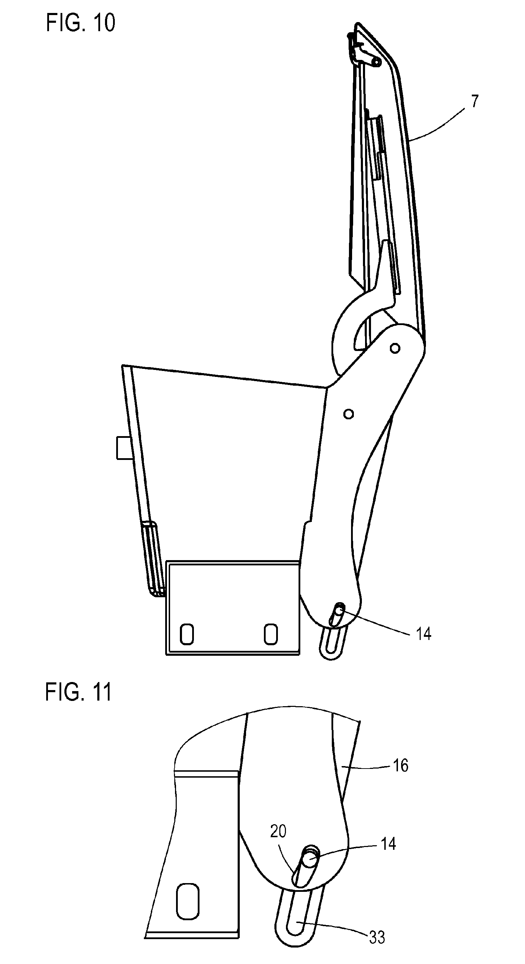

Während die Fig. 8 und 9 die Armauflage 1 zeigen, bei der der Auflageabschnitt 7 in der maximalen, über die Ausfahrbewegung der Kolbenstange 15 erreichbaren Position arretiert ist, zeigen die Fig. 10 und 11 die Armauflage 1, bei der die Aufstellposition in der 0°-Stellung arretiert ist, mithin also die Kolbenstange 15 nicht ausgefahren ist. Ersichtlich befindet sich hier - anders als in der Situation gemäß Fig. 8 und 9 - die Kolbenstange 14 im Bereich des oberen Endes der Langlöcher 20, während die Langlöcher 33 mit ihrem oberen Ende an der Stange 14 aufliegen, nachdem der Auflageabschnitt 7 maximal aufgeschwenkt ist. Wird nun der Auflageabschnitt 7 geschlossen, so kann er bis in die 0°-Stellung zurückgeschwenkt werden, da, siehe insbesondere Fig. 11, die beiden Übertragungsstangen 16 entsprechend hochgezogen werden können und ausreichend Bewegungsweg gegeben ist, bis sich die unteren Langlochenden der arretierten Stange 14 nähern.

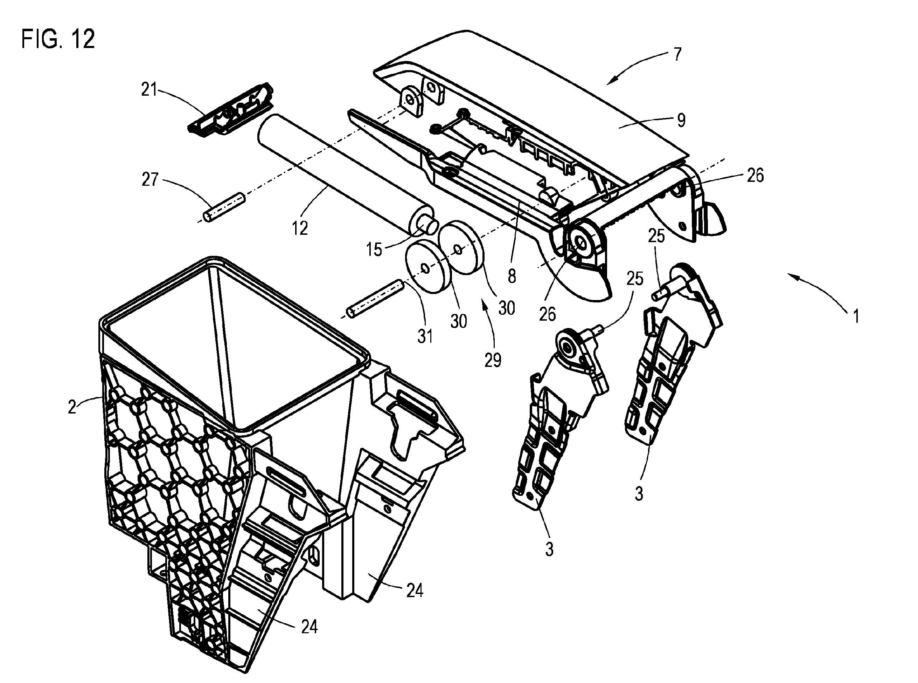

Fig. 12 zeigt eine Explosionsdarstellung einer weiteren erfindungsgemäßen Ausführungsform einer Armlehne 1, wobei für gleiche Bauteile gleiche Bezugszeichen verwendet werden. Auch diese umfasst einen behälterartigen Körper 2, an dem zwei hier separate Bauteile darstellende Träger 3 an geeigneten Befestigungswangen 24 festlegbar sind, beispielsweise dort verrastet oder verschraubt werden. An den Trägern sind im gezeigten Beispiel zwei Lagerzapfen 25 vorgesehen, die sich nach Innen erstrecken und in zwei Lageraufnahmen 26 am Tragbauteil 8 des Auflageabschnitts 7, dessen Auflagebauteil 9 auch hier nur zum Teil dargestellt ist, eingreifen, worüber die Schwenklagerung des Auflageabschnitts 7 realisiert ist.

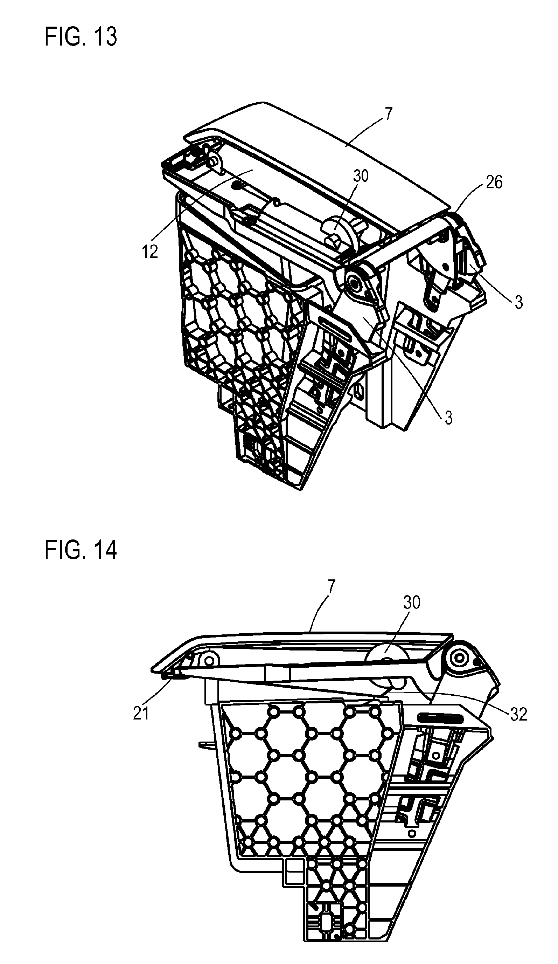

Bei dieser Ausgestaltung ist ebenfalls ein hydraulischer oder pneumatischer Stellzylinder 12 vorgesehen, der hier jedoch an der Unterseite des Auflageabschnitts 7, also am Tragbauteil 8 mittig befestigt ist. Der Stellzylinder 12 weist ebenfalls eine Kolbenstange 15 auf, die bei Betätigung des Löseelements 21, das hier quasi direkt am Stellzylinder 12 vorgesehen ist und über einen geeigneten Befestigungsbolzen 27, der eine Halterung 28 durchgreift, befestigt ist, ausfährt, und zwar horizontal in Richtung der Schwenklagerung des Auflageabschnitts 7. An der Kolbenstange 15 ist ein Führungselement 29 in Form zweier Laufrollen 30 vorgesehen, die um eine sie haltende und drehlagernde Achse 31 rotieren. In der geschlossenen Stellung, siehe insbesondere Fig. 14, liegen die Laufrollen 30 an einer schrägen Führungsfläche 32 auf, die positionsfest ist und an einem beliebigen, positionsfesten Bauteil, beispielsweise an einem oder beiden Trägern 3 ausgebildet ist. Diese Führungsfläche ist hier nur dem Grunde nach dargestellt.

Die 0°-Stellung zeigt Fig. 14. Die Kolbenstange 15 ist hier komplett eingefahren, weshalb der schwenkbare Auflageabschnitt 7 in der horizontalen Schließstellung ist. Die Laufrollen 30 liegen bereits hier an der schrägen Führungsfläche 32 an.

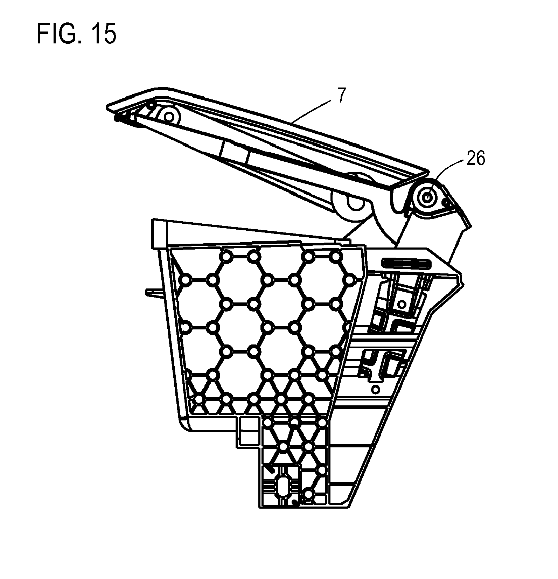

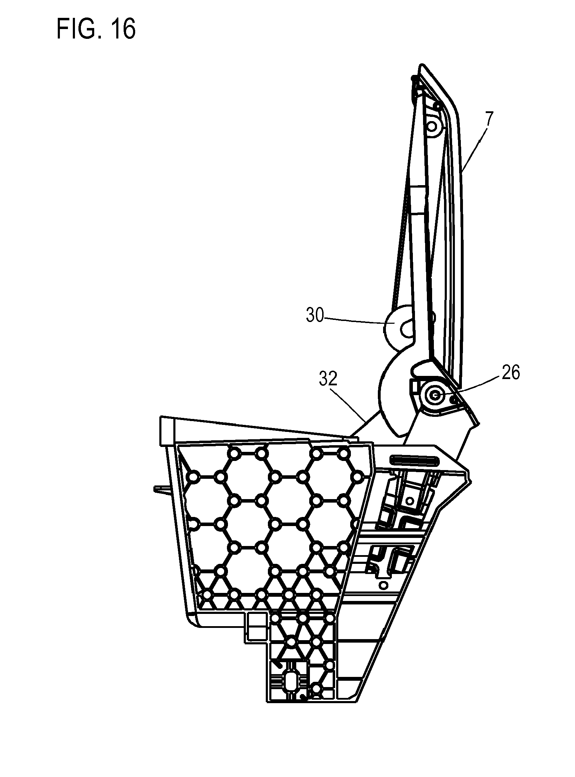

Wird nun das Löselement 21 betätigt und die Arretierung der Kolbenstange 15 freigegeben, so fährt diese automatisch aus und drückt hierbei die Laufrollen 30 gegen die schräge Führungsfläche 32, die folglich auf der Führungsfläche 32 auflaufen und abrollen, was dazu führt, dass - nachdem die Führungsfläche 32 feststeht - zwangsläufig der Auflageabschnitt 7 um die Schwenkachse im Bereich der Lageraufnahmen 26 aufschwenkt. Diese ist bis maximal in die maximale Aufschenkstellung möglich, die auch hier wiederum durch den maximal zulässigen Ausfahrweg der Kolbenstange 15 definiert ist. Dieser kann beispielsweise auch hier so bemessen sein, dass die maximale hierüber erreichbare automatisch einnehmbare Aufschwenkstellung bzw. Aufschwenkposition ca. 18° beträgt, wie in Fig. 15 gezeigt. Selbstverständlich ist auch hier jedwede Zwischenposition als reversibel einnehmbare und dauerhaft festgelegte Aufschwenkposition definierbar, hierfür ist lediglich das Löseelement 21 nur entsprechend wieder zu entlasten, sodass die Arretierung in einer Zwischenposition greift. Ausgehend von der in Fig. 15 gezeigten eingenommenen Aufschwenkpositionen sind es nun möglich, siehe Fig. 16, den Auflageabschnitt 7 beliebig und ohne jedwede Zwischenpositionsarretierung zwischen der Aufschwenkposition und der maximalen Aufschenkstellung gemäß Fig. 16 zu verschwenken, um beispielsweise in das Innere des behältnisartigen Körpers 2 zu gelangen. Aus der in Fig. 16 gezeigten Position kann der Auflageabschnitt jederzeit wieder zugeschwenkt werden, die Bewegung endet jedoch in der dauerhaft memorierten Aufschwenkposition gemäß Fig. 15. Denn mit dem Zuschwenken nähern sich die Laufrollen 30 wieder der schrägen Führungsfläche 32, mit Erreichen der Aufschwenkposition liegen sie auf der Führungsfläche 32 auf. Die Aufschwenkposition ist wieder dauerhaft eingenommen und gegen ein weiteres Zuschwenken arretiert. Zum gänzlichen Schließen ist wiederum die Arretierung der Kolbenstange 15 durch Betätigen des Löseelements 21 aufzuheben und den Auflageabschnitt 7 zu zudrücken, wobei die Kolbenstange 15 wieder eingeschoben wird.

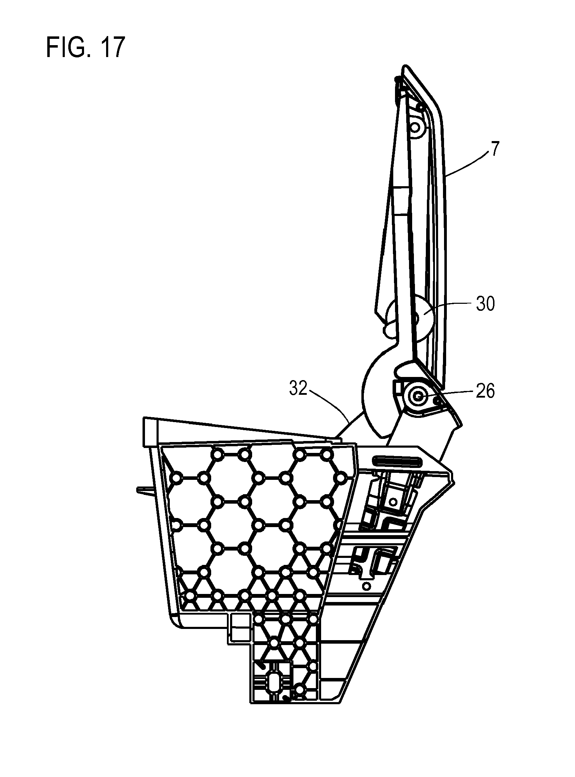

Fig. 17 zeigt schließlich die Armauflage mit vollständig aufgeschwenktem Auflageabschnitt 7, wobei hier jedoch als Aufschwenkposition dauerhaft die 0°-Stellung definiert ist, mithin also die Kolbenstange 15 überhaupt nicht ausgefahren ist. Ersichtlich liegen die Laufrollen 30 etwas weiter von der über die Lageraufnahmen 26 definierten Schwenkachse, mithin also etwas weiter beabstandet von der schrägen Führungsfläche 32. An dieser liegen sie erst an, wenn beim Zuschwenken, die 0°-Stellung gemäß Fig. 14 erreicht ist.

Ersichtlich lassen also beide erfindungsgemäßen Ausgestaltungen respektive Mechaniken die Realisierung einer Memory-Funktion betreffend eine bestimmte, dauerhaft festzulegenden Aufschwenkposition zu, die stufenlos und beliebig zwischen einer 0!-Stellung und einer maximalen, über den maximalen zulässigen Ausfahrweg der Kolbenstange definierten Aufschwenkposition liegt. Aus dieser kann der Auflageabschnitt 7 beliebig oft weiter aufgeschwenkt werden, beim Zuschwenken nimmt er jedoch automatisch wieder diese dauerhaft definierte Aufschwenkposition ein, aus der er nur dann eine weiter geschlossene Stellung oder die Grundstellung gebracht werden kann, wenn die Kolbenstange 15 gelöst und eingefahren wird.

## Patentansprüche

1. Armauflage, insbesondere für ein Kraftfahrzeug, umfassend einen Auflageabschnitt (7), der um eine Schwenkachse zwischen einer Grundstellung und einer maximalen Aufschwenkstellung schwenkbar an einem feststehend zu montierenden Träger (3) angeordnet ist, wobei der Auflageabschnitt (7) aus der im Wesentlichen horizontalen Grundstellung aufschwenkbar ist und Arretiermittel zum Arretieren des Auflageabschnitts (7) in einer Aufschwenkstellung vorgesehen sind, die den Auflageabschnitt gegen ein Zurückschwenken in die Grundstellung arretieren, **dadurch gekennzeichnet, dass** die Arretiermittel (12) die Aufschwenkstellung als reversibel einnehmbare Position dauerhaft derart definieren, dass der Auflageabschnitt (7) aus der Aufschwenkstellung ohne Veränderung der zuvor bestimmten Arretierposition weiter bis in die maximale Aufschwenkstellung aufschwenkbar ist und beim Zurückschwenken wegbegrenzt zurück in die Aufschwenkstellung bewegbar ist, aus welcher er erst nach Lösen der Arretierung in die Grundstellung zurückschwenkbar ist.

2. Armauflage nach Anspruch 1, **dadurch gekennzeichnet, dass** die Arretiermittel einen hydraulischen oder pneumatischen Stellzylinder (12) umfassen, der eine bei Betätigung eines Löseelements (21) ausfahrbare und bei Lösen des Löseelements (21) arretierbare Kolbenstange (15) aufweist, die mit dem Auflageabschnitt (7) derart bewegungsgekoppelt ist, dass der Auflageabschnitt (7) beim Ausfahren der Kolbenstange (15), zumindest hierüber unterstützt, aufschwenkt, wobei über den Ausfahrweg der Kolbenstange (15) die Arretierposition definiert wird.

3. Armauflage nach Anspruch 2, **dadurch gekennzeichnet, dass** die Kolbenstange (15) mit ihrem Ende über ein daran vorgesehenes Verbindungselement (14) mit einer Übertragungsstange (16), welches Verbindungselement (14) dort in ein Langloch (33) eingreift, gekoppelt ist, die ihrerseits exzentrisch zur Schwenkachse des Auflageabschnitts (7) mit diesem verbunden ist, derart, dass bei in der Grundstellung befindlichem Auflageabschnitt (7) und Lösen der Arretierung die Kolbenstange (15) ausfährt und über das Verbindungselement (14) die Übertragungsstange (14) maximal bis zum Erreichen der Ausfahrstellung mitnimmt, wobei der Auflageabschnitt (7) infolge der Bewegung der Übertragungsstange (16) um seine Schwenkachse aufschwenkt, wonach bei weiterer manueller Aufschwenkung des Auflageabschnitts (7) die Übertragungsstange (16) relativ zum stehenden, in dem Langloch (33) wandernden Verbindungselement (14) bewegt wird, wobei bei nachfolgendem Zuschwenken des Auflageabschnitts (7) die Übertragungsstange (16) in die entgegengesetzte Richtung soweit bewegt wird, bis das Ende des Langlochs (33) gegen das stehende Verbindungselement (14) läuft.

4. Armauflage nach einem der vorangehenden Ansprüche, **dadurch gekennzeichnet, dass** die maximale Ausfahrstellung über ein an einem Träger (3) vorgesehenes weiteres Langloch (20), in das das Verbindungselement (14) greift, definiert ist.

5. Armauflage nach einem der vorangehenden Ansprüche, **dadurch gekennzeichnet, dass** ein Träger vorgesehen ist, an dem der Stellzylinder (12) mit seinem positionsfesten Ende befestigt ist.

6. Armauflage nach einem der vorangehenden Ansprüche, **dadurch gekennzeichnet, dass** ein gemeinsamer Träger (3) vorgesehen ist, an dem sowohl das weitere Langloch (20) ausgebildet als auch der Auflageabschnitt (7) und der Stellzylinder (12) angeordnet sind.

7. Armauflage nach einem der vorangehenden Ansprüche, **dadurch gekennzeichnet, dass**, gegebenenfalls jeweils, zwei benachbarte Träger (3), an denen der Auflageabschnitt (7) schwenkgelagert und/oder jeweilige Langlöcher (20) vorgesehen und/oder der Stellzylinder (12) befestigt ist, sowie zwei Übertragungsstangen (16) vorgesehen sind.

8. Armauflage nach Anspruch 7, **dadurch gekennzeichnet, dass** eine beide Träger (3) verbindende Lagerstange (11) vorgesehen ist, an der der Stellzylinder (12) angeordnet ist, und/oder dass eine beide Träger (3) verbindende Lagerstange (6) vorgesehen ist, die der Lagerung des Auflageabschnitts (7) dient, und/oder dass das Verbindungselement eine am Kolbenstangenende vorgesehene, sich zu beiden Seiten erstreckende Stange (14) ist.

9. Armauflage nach Anspruch 2, **dadurch gekennzeichnet, dass** der Stellzylinder (12) unterseitig an dem Auflageabschnitt (7) angeordnet ist, wobei an der Kolbenstange (15) ein Führungselement (29) angeordnet ist, das beim Ausfahren der Kolbenstange (15) auf eine positionsfeste schräg stehende Führungsfläche (32) aufläuft und längs dieser läuft, dabei den Auflageabschnitt (7) samt Stellzylinder (12) aufschwenkend.

10. Armauflage nach Anspruch 9, **dadurch gekennzeichnet, dass** das Führungselement (29) eine oder zwei an der Kolbenstange (12) drehgelagerte Laufrollen (30) oder einen Gleitschuh umfasst.

11. Armauflage nach Anspruch 9 oder 10, **dadurch gekennzeichnet, dass** zwei benachbarte Träger (3), an denen der Auflageabschnitt (7) schwenkgelagert ist, vorgesehen sind.

12. Armauflage nach Anspruch 7 oder 11, **dadurch gekennzeichnet, dass** die beiden Träger (3) einstückig oder lösbar an einem behälterartigen Körper (2), der mittels des Auflageabschnitts (7) verschließbar ist, angeordnet sind.

13. Armauflage nach einem der vorangehenden Ansprüche, **dadurch gekennzeichnet, dass** der Auflageabschnitt (7) aus einem Tragbauteil (8), an dem ein oder zwei der Schwenklagerung und gegebenenfalls der Verbindung zu der oder den Übertragungsstangen (16) dienende Lagerabschnitte (10, 19, 26) vorgesehen sind, und einem am Tragbauteil (8) angeordneten oder dieses zumindest teilweise umhüllenden Auflagebauteil (9) besteht.

14. Armauflage nach einem der vorangehenden Ansprüche, **dadurch gekennzeichnet, dass** ein trägerseitig oder tragbauteilseitig vorgesehenes Schwenklager oder Langloch über ein Metallelement, insbesondere eine Metallbuchse verstärkt sind.

15. Armauflage nach einem der vorangehenden Ansprüche, **dadurch gekennzeichnet, dass** das Betätigungselement (21) an der Unterseite des Auflageabschnitts (7) im Bereich des aufschwenkbaren Endes angeordnet ist.
